# EUROPÄISCHE PATENTSCHRIFT

(11) **EP 1 025 368 B1**
(45) Veröffentlichungstag und Bekanntmachung des Hinweises auf die Patenterteilung: **12.12.2001**
(21) Anmeldenummer: 98961010.0
(22) Anmeldetag: 14.10.1998
(51) Int. Cl.: F16B 5/06

(54) **VERBINDUNGSELEMENT ZWISCHEN EINEM TRÄGER, INSBESONDERE EINEM KAROSSERIETEIL EINES KRAFTFAHRZEUGS, UND EINEM PLATTENELEMENT**
CONNECTION ELEMENT BETWEEN A SUPPORT, ESPECIALLY A BODY PART OF A MOTOR VEHICLE, AND A PLATE ELEMENT
ELEMENT D'ASSEMBLAGE ENTRE UN SUPPORT, NOTAMMENT UN ELEMENT DE CARROSSERIE D'UN VEHICULE A MOTEUR, ET UN PANNEAU

(30) Priorität: 17.10.1997 DE 29718487 U
(43) Veröffentlichungstag der Anmeldung: 09.08.2000
(73) Patentinhaber: TRW Automotive Electronics & Components GmbH & Co. KG, 78315 Radolfzell (DE)
(72) Erfinder: KRAUS, Willibald, D-67289 Grünstadt (DE)
(74) Vertreter: Eder, Thomas, Dr.-Ing.
(86) Internationale Anmeldenummer: DE9803019
(87) Internationale Veröffentlichungsnummer: WO9920907

(56) Entgegenhaltungen:
- EP-A- 0 726 401
- EP-A- 0 735 283

## Beschreibung

1. Die Erfindung bezieht sich auf ein Verbindungselement zwischen einem Träger, insbesondere einem Karosserieteil eines Kraftfahrzeuges, und einem Plattenelement, insbesondere einer Türverkleidung, nach dem Oberbegriff des Anspruchs 1.

Als Stand der Technik ist bereits ein derartiges Verbindungselement bekannt (EP 0 726 401 A1), bei welchem zwei oberhalb einer umlaufenden elastischen Dichtlippe angeordnete Flansche unterschiedliche Elastizität aufweisen. Die beiden Flansche lassen sich seitlich in Taschen eines Eingriffsbereichs des Oberteils einschieben; die Dichtlippe ist in der Lage, den oberen Bereich eines Trägers in montiertem Zustand zu beaufschlagen.

Weiterer Stand der Technik ist eine Verbindung mit einem an einem Plattenelement befestigbaren Oberteil, einem Mittelteil und einem Halteelement (DE 40 14 589 C1). Durch diese Konstruktion ist ein insbesondere in der Kraftfahrzeugindustrie erforderlicher Toleranzausgleich nur in der parallel zum Träger liegenden Ebene möglich.

Der vorliegenden Erfindung liegt demgegenüber die Aufgabe zugrunde, ein Verbindungselement der eingangs genannten Art so zu gestalten, dass im montierten Zustand auf einfache Weise eine hohe Passgenauigkeit erzielt wird, wobei außerdem die Trägeröffnung eine einwandfreie Abdichtung erfahren soll.

Diese Aufgabe wird erfindungsgemäß dadurch gelöst, dass das Halteteil zwischen der Dichtlippe und den beiden Flanschen einen dritten elastischen Flansch aufweist, welcher den Auβenbereich einer Platte der unteren Tasche beaufschlagt, und dass die Dichtlippe an der dem Träger zugekehrten Seite mit einem umlaufenden Dichtelement versehen ist.

Durch das Vorsehen eines dritten elastischen Flansches ergibt sich bei einer verbesserten Montage ein passgenauer Sitz des Halteteils in dem Oberteil, so dass mögliche unerwünschte Verschiebungen einwandfrei vermieden werden. Durch das Dichtelement wird darüber hinaus eine einwandfreie Abdichtung des in einer Trägeröffnung eingelagerten Halteteils erreicht.

In weiterer Ausgestaltung der Erfindung kann der dritte Flansch am Außenumfang einen gegen den Außenbereich der Platte gerichteten umlaufenden Dichtring aufweisen, wodurch vorteilhafterweise eine gute Anlage an dem Eingriffsbereich des Oberteils gewährleistet wird.

Der Durchmesser des dritten Flanschs kann kleiner als der Durchmesser des ersten Flanschs und größer als der des zweiten Flanschs sein.

Nach einem anderen Merkmal der Erfindung kann das Dichtelement als Schaumstoffkörper ausgebildet sein, wobei das Dichtelement und die Dichtlippe im Zweikomponenten-Spritzverfahren hergestellt werden können. Weiterhin kann das Dichtelement als umlaufender, elastischer Ring ausgebildet sein, so dass im Zusammenwirken mit den anderen Merkmalen eine einwandfreie Abdichtung gegen die Trägeröffnung gewährleistet ist.

Die Erfindung wird nachfolgend anhand eines in der Zeichnung dargestellten Ausführungsbeispiels näher beschrieben. In der Zeichnung zeigen:
- Fig. 1: eine schematische Seitenansicht eines Halteteils;
- Fig. 2: eine schematische Seitenansicht der Verbindung eines Oberteils mit dem Halteteil in montierter Position;
- Fig. 3: eine perspektivische Ansicht des Halteteils nach Fig. 1.

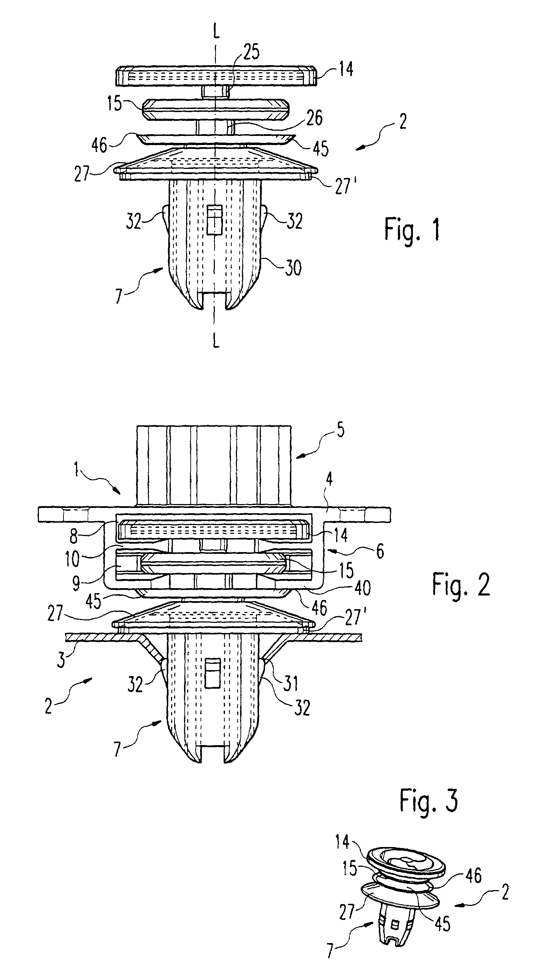

Fig. 1 und 3 zeigen ein Halteteil 2 in Seitenansicht bzw. in perspektivischer Darstellung.

Nach Fig. 1 besteht das Halteteil 2 im Wesentlichen aus einem unteren Befestigungsbereich 7, einer darüber angeordneten elastischen Dichtlippe 27 sowie drei Flanschen 45, 15 und 14. Zwischen den beiden Flanschen 14 und 15 befindet sich ein Befestigungshals 25, zwischen dem Flansch 15 und dem Flansch 45 befindet sich ein Verbindungshals 26.

Der Befestigungsbereich 7 ist beispielsweise als Anker- oder Zylinderfuß 30 mit elastischen Rastelementen 32 ausgebildet. Infolge der Verbindungshälse 25 und 26 liegen die beiden Flansche 14 und 15 in Längsrichtung L-L im Abstand voneinander. Der dritte Flansch 45 ist dicht an die Dichtlippe 27 herangeführt und weist am Außenumfang einen umlaufenden Dichtring 46 auf.

Der Durchmesser des dritten Flanschs 45 ist gemäß Fig. 1 kleiner als der Durchmesser des ersten Flanschs 14 und größer als der Durchmesser des zweiten Flanschs 45.

Das Dichtelement 27', welches sich auf der Unterseite der Dichtlippe 27 befindet, kann als Schaumstoffkörper in Form eines Ringes ausgebildet sein. Es besteht hierbei die Möglichkeit, die Dichtlippe mit den beiden Flanschen sowie das aus einem anderen elastischen Material bestehende Dichtelement 27' im Zweikomponenten-Spritzverfahren herzustellen.

Wie außerdem aus Fig. 1 erkennbar, weist der obere Flansch 14 einen größeren Durchmesser als der untere Flansch 15 auf. Der Verbindungshals 26 besitzt gleichfalls einen größeren Durchmesser als der Verbindungshals 25, wobei beide Hälse vorzugsweise zylindrisch ausgebildet sind.

Das in Fig. 2 dargestellte Oberteil 1 besteht im Wesentlichen aus einem Befestigungsbereich 5, welcher beliebig gestaltet sein kann, und einem Eingriffsbereich 6. Der Eingriffsbereich 6 kann beispielsweise rechteckige Außenform aufweisen und zwei Taschen 8, 9 besitzen, welche durch einen Quersteg 10 voneinander getrennt sind. Die untere Tasche 9 wird von einer Platte 40 begrenzt.

Der Quersteg 10 und die Platte 40 weisen einen nicht näher dargestellten Einschubschlitz für die Verbindungshälse 25 und 26 des in Fig. 1 dargestellten Halteteils 2 auf. Hinter diesen Einschubschlitzen befinden sich jeweils Öffnungen größeren Durchmessers, wobei der Bereich der Einschubschlitze vorzugsweise konisch ausgebildet ist, so dass bei seitlichem Einschieben des Halteteils 2 in das Oberteil 1 eine leichte Montage möglich ist.

Nach Durchführung dieser Montage lagern sich die beiden Flansche 14 und 15 in den entsprechenden Taschen 8 und 9 ein, wohingegen der dritte Flansch 45 den Außenbereich der Platte 40 beaufschlagt und somit zu einem passgenauen Sitz des Halteteils 2 in dem Oberteil 1 beiträgt. Wie aus Fig. 2 erkennbar, beaufschlagt der Dichtring 46 des dritten Flanschs 45 den Außenbereich der Platte 40 und stellt somit eine Abdichtwirkung her.

Aus Fig. 2 ist darüber hinaus erkennbar, dass nach durchgeführter Montage das Halteteil 2 in eine Öffnung 31 eines Trägers 3 eingelagert ist, wobei sich die Rastelemente 32 hinter der Öffnung 31 einlagern.

In diesem montierten Zustand beaufschlagt das Dichtelement 27' die Oberseite des Trägers 3, so dass eine einwandfreie Abdichtung gegen die Trägeröffung 31 gewährleistet ist. Das Dichtelement 27' kann als Schaumstoffkörper ausgebildet sein und übt somit eine sehr gute Abdichtung aus.

Durch das Vorsehen eines dritten Flanschs 45, welcher sich in montiertem Zustand außerhalb der Taschen 8 und 9 des Oberteils 1 befindet, wird auf einfache Weise eine gute Passgenauigkeit erzielt, wobei die gesamte Anordnung infolge der Verwendung des Dichtelements einwandfrei in montiertem Zustand gegen eine Öffnung 31 des Trägers 3 abgedichtet ist.

## Patentansprüche

1. Verbindungselement, bestehend aus einem Oberteil (1) und einem Halteteil (2), zur Verbindung eines Trägers (3), insbesondere einem Karosserieteil eines Kraftfahrzeuges, mit einem Plattenelement, insbesondere einer Türverkleidung,
wobei das Oberteil (1) über einen Befestigungsbereich (5) an dem Plattenelement befestigbar ist und einen Eingriffsbereich (6) für das mit dem Träger (3) verbindbare Halteteil (2) aufweist,
wobei der Eingriffsbereich (6) des Oberteils (1) aus zwei übereinander angeordneten, durch einen Quersteg (10) voneinander getrennten Taschen (8, 9) besteht, und
wobei das Halteteil (2) oberhalb eines mit dem Träger (3) verbindbaren Befestigungsbereichs (7) mit einer umlaufenden elastischen Dichtlippe (27) und mit zwei im axialen Abstand voneinander angeordneten, quer zur Längsrichtung (L-L) in die Taschen (8, 9) einschiebbaren Flanschen (14, 15) unterschiedlicher Elastizität versehen ist,
**dadurch gekennzeichnet,**
**dass** das Halteelement (2) zwischen der Dichtlippe (27) und den beiden Flanschen (14, 15) einen dritten elastischen Flansch (45) aufweist, welcher den Außenbereich einer Platte (40) der unteren Tasche (9) beaufschlagt und dass die Dichtlippe (27) an der dem Träger (3) zugekehrten Seite mit einem umlaufenden Dichtelement (27') versehen ist.

2. Verbindungselement nach Anspruch 1,
**dadurch gekennzeichnet,**
**dass** der dritte Flansch (45) am Außenumfang einen gegen den Außenbereich der unteren Platte (40) gerichteten, umlaufenden Dichtring (46) aufweist.

3. Verbindungselement nach einem oder mehreren der vorhergehenden Ansprüche,
**dadurch gekennzeichnet,**
**dass** der Durchmesser des dritten Flanschs (45) kleiner als der Durchmesser des ersten Flanschs (14) und größer als der Durchmesser des zweiten Flanschs (15) ist.

4. Verbindungselement nach Anspruch 1,
**dadurch gekennzeichnet,**
**dass** das Dichtelement (27') als Schaumstoffkörper ausgebildet ist.

5. Verbindungselement, nach Anspruch 1 und 4,
**dadurch gekennzeichnet,**
**dass** das Dichtelement (27') und die Dichtlippe (27) im Zweikomponenten-Spritzverfahren hergestellt sind.

6. Verbindungselement nach einem oder mehreren der vorhergehenden Ansprüche,
**dadurch gekennzeichnet,**
**dass** das Dichtelement (27') als Ring ausgebildet ist.

## Claims

1. Connecting element comprising an upper part (1) and a holding part (2) for the connection of a support (3), in particular a body part of a motor vehicle, to a panel element, in particular a door covering,
where the upper part (1) can be fastened via a fastening region (5) to the panel element and has an engagement region (6) for the holding part (2), which can be connected to the support (3),
where the engagement region (6) of the upper part (1) comprises two pockets (8, 9) which are arranged one above the other and are separated from each other by a transverse web (10), and
where, above a fastening region (7) which can be connected to the support (3), the holding part (2) is provided with an encircling, elastic sealing lip (27) and with two flanges (14, 15) which are arranged at an axial distance from each other, can be pushed into the pockets (8, 9) transversely with respect to the longitudinal direction (L-L) and have differing elasticity, **characterized in that** the holding element (2) has, between the sealing lip (27) and the two flanges (14, 15), a third elastic flange (45) which acts upon the outer region of a panel (40) of the lower pocket (9), and **in that** on the side facing the support (3) the sealing lip (27) is provided with an encircling sealing element (27').

2. Connecting element according to Claim 1, **characterized in that** the third flange (45) has, on the outer circumference, an encircling sealing ring (46) which is directed towards the outer region of the lower panel (40).

3. Connecting element according to one or more of the preceding claims, **characterized in that** the diameter of the third flange (45) is smaller than the diameter of the first flange (14) and larger than the diameter of the second flange (15).

4. Connecting element according to Claim 1,
**characterized in that** the sealing element (27') is designed as a foam body.

5. Connecting element according to Claims 1 and 4, **characterized in that** the sealing element (27') and the sealing lip (27) are produced in a two-component injection-moulding process.

6. Connecting element according to one or more of the preceding claims, **characterized in that** the sealing element (27') is designed as a ring.

## Revendications

1. Elément d'assemblage comprenant une partie supérieure (1) et une partie de retenue (2) pour relier un support (3), notamment une partie de la carrosserie d'un véhicule automobile, à un panneau consistant notamment en un habillage de porte,
la partie supérieure (1) pouvant être fixée au panneau par l'intermédiaire d'une zone de fixation (5), et présentant une zone (6) de venue en prise destinée à la partie de retenue (2) pouvant être reliée au support (3),
la zone (6) de venue en prise de la partie supérieure (1) étant constituée de deux alvéoles (8, 9) agencés en superposition et séparés l'un de l'autre par une membrure transversale (10), et
la partie de retenue (2) étant pourvue, au-dessus d'une zone de fixation (7) pouvant être reliée au support (3), d'une lèvre périphérique d'étanchement (27) élastique, et de deux collerettes (14, 15) à élasticités différentes, qui sont disposées à distance axiale l'une de l'autre et peuvent être insérées dans les alvéoles (8, 9), transversalement par rapport à la direction longitudinale (L-L),
**caractérisé par le fait**
**que** l'élément de retenue (2) comporte, entre la lèvre d'étanchement (27) et les deux collerettes (14, 15), une troisième collerette élastique (45) sollicitant la région extérieure d'une plaque (40) de l'alvéole inférieur (9) ; et par le fait que la lèvre d'étanchement (27) est munie d'un élément périphérique d'étanchement (27') sur le côté tourné vers le support (3).

2. Elément d'assemblage selon la revendication 1,
**caractérisé par le fait**
**que** la troisième collerette (45) présente, sur le pourtour extérieur, une bague périphérique d'étanchement (46) orientée vers la région extérieure de la plaque inférieure (40).

3. Elément d'assemblage selon l'une ou plusieurs des revendications précédentes,
**caractérisé par le fait**
**que** le diamètre de la troisième collerette (45) est plus petit que le diamètre de la première collerette (14), et plus grand que le diamètre de la deuxième collerette (15).

4. Elément d'assemblage selon la revendication 1,
**caractérisé par le fait**
**que** l'élément d'étanchement (27') est réalisé sous la forme d'un corps en mousse.

5. Elément d'assemblage selon les revendications 1 et 4,
**caractérisé par le fait**
**que** l'élément d'étanchement (27') et la lèvre d'étanchement (27) sont fabriqués selon le procédé de moulage par injection à deux composants.

6. Elément d'assemblage selon l'une ou plusieurs des revendications précédentes,
**caractérisé par le fait**
**que** l'élément d'étanchement (27') est réalisé sous la forme d'un anneau.
